# EUROPÄISCHE PATENTSCHRIFT

(11) **EP 3 383 226 B1**
(45) Veröffentlichungstag und Bekanntmachung des Hinweises auf die Patenterteilung: **27.03.2019**
(21) Anmeldenummer: 15830776.9
(22) Anmeldetag: 02.12.2015
(51) Int. Cl.: A46B 13/00, A46B 3/16

(54) **WALZENBÜRSTENGRUNDKÖRPER UND WALZENBÜRSTE**
ROTARY BRUSH MAIN PART AND ROTARY BRUSH
CORPS DE BASE POUR BROSSE CYLINDRIQUE ET BROSSE CYLINDRIQUE

(43) Veröffentlichungstag der Anmeldung: 10.10.2018
(73) Patentinhaber: WashTec Holding GmbH, 86153 Augsburg (DE)
(72) Erfinder: MAYER, Stefan, 86356 Neusäss (DE)
(74) Vertreter: Reitstötter Kinzebach
(86) Internationale Anmeldenummer: PCT/EP2015/002426
(87) Internationale Veröffentlichungsnummer: WO 2017/092776

(56) Entgegenhaltungen:
- EP-A1- 2 932 869
- DE-A1- 10 233 055
- DE-U1- 20 211 339
- KR-B1- 100 919 923

## Beschreibung

Die Erfindung betrifft eine Walzenbürste zur Behandlung der Oberfläche von Fahrzeugen nach dem Oberbegriff des Anspruchs 1.

Aus dem Stand der Technik sind Waschanlagen zur äußerlichen Reinigung von Fahrzeugen bekannt. Oftmals weisen diese Waschanlagen mehrere Walzenbürsten auf, welche mit einem Bürstenbesatz in Form von Reinigungsbürsten oder auch Reinigungslappen versehen sind und bei einer Drehung um Ihre Längsachse Verschmutzungen von der Oberfläche des zu reinigenden Fahrzeugs entfernen. Die Herstellung dieser Walzenbürsten verursacht jedoch einen erheblichen Anteil an den Herstellkosten der Waschanlage, da die Montage des Besatzes an den Walzenbürsten aufgrund der komplexen Montagevorgänge bisher in Handarbeit erfolgt und zudem sehr zeitintensiv ist.

Aus der US 4,104,756 ist eine Walzenbürste bekannt, an welcher die Lappen an einem Walzenbürstengrundkörper befestigt sind. Zur Befestigung der Lappen an dem Walzenbürstengrundkörper sind an dessen äußerer Mantelfläche mehrere in Umfangsrichtung des Walzenbürstengrundkörper beabstandete Besatzhalter vorgesehen. Bei der Montage eines Lappens wird dabei zuerst ein Steg des Besatzhalters durch eine endseitige Schlaufe an dem Lappen geführt. Anschließend wird die endseitige Schlaufe des Lappens mit dem Steg in eine Längsnut des Walzenbürstengrundkörpers eingeschoben, wodurch der Lappen und der Besatzhalter an dem Walzenbürstengrundkörper in formschlüssigen Eingriff gelangen. Wenn der Lappen beim Einschieben Falten wirft, bleibt der Besatzhalter stecken, dann muss er wieder herausgezogen und ein neuer Montageversuch unternommen werden. Da dieser Vorgang für jeden Lappen an der Walzenbürste einzeln ausgeführt werden muss, hat die komplette Montage einer Walzenbürste einen erheblichen Zeit- und Kostenaufwand zur Folge. Zudem ist eine derartiger Besatzhalter auch nicht geeignet, Lappen mit verschiedenen Materialstärken zu montieren und sicher zu halten, da eine Einstellung der Haltekraft oder Halteposition durch dieses starre System nicht möglich ist.

Die DE 202 11 339 U1 beschreibt eine Walzenbürste nach dem Oberbegriff des Anspruchs 1. Sie umfasst ein Tragelement, an dem Behandlungselemente befestigt sind. Für diese Befestigung sind in dem Tragelement Nuten vorgesehen. In jeder Nut ist ein Kern mit darüber gelegtem Behandlungselement eingelegt und dort mittels Befestigungsmitteln befestigt. Der Kern ist als Befestigungsleiste ausgebildet, welcher durch die Befestigungsmittel an dem Tragelement befestigt ist. Die Befestigungsmittel können durch Schrauben, durch Zapfen oder mittels einer Rastnase befestigt sein.

Weitere Bürsten für Waschanlagen, bei denen die Haltekraft für Besatzhalter durch Schrauben eingestellt werden kann, sind in der KR 100 919 923 B1 und der EP 2 932 869 A1 beschrieben.

Schließlich ist aus der DE 102 33 055 A1 eine Walzenbürste für eine Autowaschanlage bekannt, die einen Borstenbesatz aufweist, der von Besatzelementen gebildet ist. Die Besatzelemente sind durch eine Befestigungsleiste in den Nuten befestigt.

Eine Aufgabe der Erfindung ist, eine Walzenbürste zu schaffen, an der Besätze mit unterschiedlichen Materialstärken schnell und einfach montierbar sind.

Diese Aufgabe wird durch eine Walzenbürste mit den Merkmalen des Anspruchs 1 gelöst. Vorteilhafte Ausgestaltungen der Erfindung sind in den Unteransprüchen angegeben.

Die erfindungsgemäße Walzenbürste zeichnet sich dadurch aus, dass jeder Besatzhalter an dem Walzenbürstengrundkörper in mehreren in Radialrichtung des Walzenbürstengrundkörpers beabstandeten Arretierpositionen fixierbar ist. Da der Abstand zwischen dem Walzenbürstengrundkörper und dem Besatzhalter in jeder dieser Positionen unterschiedlich ist, ist jede dieser Arretierpositionen für die Befestigung eines Bürstenbesatzes mit anderer Materialstärke geeignet.

Zur Befestigung des Bürstenbesatzes genügt es, wenn dieser zwischen dem Walzenbürstengrundkörper und den Besatzhaltern geklemmt ist.

Für eine schnelle und einfache automatisierbare Montage des Bürstenbesatzes und ggf. auch eine Automatisierung der Montage ist es vorteilhaft, wenn der Walzenbürstengrundkörper und jeder Besatzhalter zusammenwirkende grundkörperseitige bzw. besatzhalterseitige Rastmittel umfassen. Erfindungsgemäß sind die Arretierpositionen Rastpositionen der Rastmittel. Die Montage kann dann erfolgen, indem ein Besatzhalter radial von außen nach innen durch die aufeinanderfolgenden Rastpositionen hindurchbewegt wird, bis der Widerstand des zwischen Walzenbürstengrundkörper und Besatzhalter geklemmten Bürstenbesatzes ein weiteres Vordringen des Besatzhalters verhindert. Wenn eine solche Anschlagposition erreicht ist, kann der Besatzhalter losgelassen werden; der Druck des Besatzes treibt dann den Besatzhalter in die zuletzt durchlaufene Rastposition zurück und hält ihn dort fixiert. Faltenbildung im Besatz ist bei dieser Art der Montage nicht zu befürchten.

Erfindungsgemäß weist eines der Rastmittel mehrere in Radialrichtung des Walzenbürstengrundkörpers beabstandete Rastkerben auf, wobei ein Rastvorsprung des anderen Rastmittels in jeder Rastposition in eine dieser Rastkerben eingreift. Dabei ist es unerheblich, ob die mehreren Rastkerben zu den grundkörperseitigen und der Rastvorsprung zu den besatzhalterseitigen Rastmitteln gehört oder umgekehrt.

Die Besatzhalter umfassen vorzugsweise jeweils einen in axialer Richtung des Walzenbürstengrundkörpers langgestreckten Steg und jeweils mindestens einen von dem Steg in radialer Richtung des Walzenbürstengrundkörpers abstehenden, die besatzhalterseitigen Rastmittel tragenden Arm.

Ein Arm mit besatzhalterseitigen Rastmitteln kann an jedem Ende der Stege vorgesehen sein; es ist aber auch denkbar, ein Ende eines Stegs über ein -vorzugsweise zerlegbares - Scharnier mit dem Walzenbürstengrundkörper zu verbinden.

Grundkörperseitige Rastmittel sind vorzugsweise gut zugänglich an wenigstens einer Stirnseite des Walzenbürstengrundkörpers, im Falle, dass die Besatzhalter an jedem Ende des Steges einen Arm aufweisen, besser an beiden Stirnseiten vorgesehen.

Zwischen zwei Rastpositionen sollte der Arm eine Stellung durchlaufen, in der er elastisch ausgelenkt ist. Dann ist der Besatzhalter nicht nur durch die Rückstellkraft des Bürstenbelages, sondern auch durch seine eigene Elastizität in der Rastposition gehalten.

Vorzugsweise ist der Arm in der elastisch ausgelenkten Stellung in axialer Richtung des Walzenbürstengrundkörpers nach außen ausgelenkt.

Der Arm kann sich zweckmäßigerweise über eine Stirnseite des Walzengrundkörpers erstrecken. Dort ist er gut zugänglich, so dass die Rastmittel auch wenn erforderlich wieder voneinander gelöst werden können, um etwa den Bürstenbesatz zu erneuern.

Hinzu kommt, dass bei einer Walzenbürste mit mehreren um eine gemeinsame Achse drehbaren Walzengrundkörpern der sich über eine Stirnseite des ersten Walzenbürstengrundkörpers erstreckende Arm zwischen dem ersten und einem zweiten Walzenbürstengrundkörper axial fixiert sein kann. Dabei muss der Arm durch den zweiten Walzenbürstengrundkörper nicht komplett axial unbeweglich gehalten sein; es genügt, dass seine Bewegungsfreiheit so weit eingeschränkt ist, dass er durch den zweiten Walzenbürstengrundkörper daran gehindert ist, die Stellung maximaler elastischer Auslenkung zwischen zwei Rastpositionen zu erreichen.

Wenn der Arm in der Rastposition in einer Nut an einer Stirnseite des ersten Walzenbürstengrundkörpers versenkt ist, können die Stirnseiten der Walzenbürstengrundkörper zwischen den Nuten aufeinander aufliegen, so dass der untere Walzenbürstengrundkörper den oberen großflächig und stabil unterstützen kann.

Eine axiale Auslenkung des Arms, die zum Übergehen von einer Rastposition des Arms in eine andere erforderlich ist, sollte größer sein als die Auslenkung zwischen der Rastposition und einer mit der Stirnseite bündigen Position, damit der Arm durch eine die Nut überdeckende Stirnfläche des zweiten Walzenbürstengrundkörpers am Verlassen seiner Rastposition gehindert werden kann. Andererseits sollte die Auslenkung vorzugsweise auch nicht größer als das Doppelte der Auslenkung zwischen der Rastposition und der mit der Stirnseite bündigen Position sein, dann können nämlich auch dann, wenn sich die Stirnseiten von zwei Walzenbürstengrundkörpern gegenseitig berühren, die Besatzhalter in ihre Rastpositionen radial von außen eingeschoben werden, sofern die Nuten der sich gegenüberliegenden Stirnseiten miteinander überlappen.

Um die Arme in der Raststellung zu sichern, können die Arme einen Durchgang aufweisen, in den ein Riegel in axialer Richtung einführbar ist. Die Sicherungswirkung kann auf einem Kontakt des Riegels mit einer Innenfläche des Durchgangs beruhen, der Riegel kann aber auch einen Kopf aufweisen, der an einer vom Walzenbürstengrundkörper abgewandten Seite des Arms anliegt und so die elastische Auslenkung des Arms blockiert.

Um den Arm durch Anliegen an seiner vom Walzenbürstengrundkörper abgewandten Seite zu blockieren, muss der Riegel nicht notwendigerweise in einen Durchgang des Arms eingreifen, es genügt, wenn ein Fuß des Riegels im Walzenbürstengrundkörper verankert ist.

Wenn ein solcher den Arm durch seinen anliegenden Kopf blockierender Riegel allerdings einen Durchgang des Arms durchsetzt, dann ist dieser Durchgang vorzugsweise als Langloch oder Schlitz ausgebildet, um einen Übergang zwischen verschiedenen Rastpositionen zu ermöglichen, ohne dafür den Riegel vollständig vom Walzenbürstengrundkörper lösen zu müssen.

Für eine besonders schnelle und kostengünstige Montage kann der Arm am Walzenbürstengrundkörper auch verschweißt sein.

Um eine radiale Ausrichtung des vom Walzenbürstengrundkörper abstehenden Besatzes zu fördern, können die Besatzhalter in Längsnuten an der äußeren Mantelfläche des Walzenbürstengrundkörpers eingreifen.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine perspektivische Ansicht eines Walzenbürstengrundkörpers und der dazugehörigen Besatzhalter nach einem ersten Ausfuhrungsbeispiel;
- **Fig. 2**: einen radialen Schnitt durch einen Arm eines Besatzhalters in einer ersten Rastposition am Walzenbürstengrundkörper;
- **Fig. 3**: den Arm in einer zweiten Rastposition;
- **Fig. 4**: den Arm in einer vierten Rastposition;
- **Fig. 5**: einen zu Fig. 2 analogen Schnitt gemäß einer zweiten Ausgestaltung;
- **Fig. 6**: eine perspektivische Darstellung einer erfindungsgemäßen Walzenbürste ohne Besatz;
- **Fig. 7**: einen radialen Schnitt durch die Arme von zwei zueinander benachbarten Besatzhaltern an zwei einander berührenden Walzenbürstengrundkörpern gemäß einer dritten Ausgestaltung;
- **Fig. 8**: einen zweiten Schnitt durch die Arme der Fig. 7, wobei sich einer der Arme in einer elastisch ausgelenkten Stellung zwischen zwei Rastpositionen befindet;
- **Fig. 9**: einen zu Fig. 7 analogen Schnitt gemäß einer vierten Ausgestaltung;
- **Fig. 10**: eine Draufsicht in axialer Richtung auf eine Walzenbürste gemäß einer fünften Ausgestaltung der Erfindung;
- **Fig. 11**: einen zu Fig. 2 analogen Schnitt gemäß einer Abwandlung der fünften Ausgestaltung.

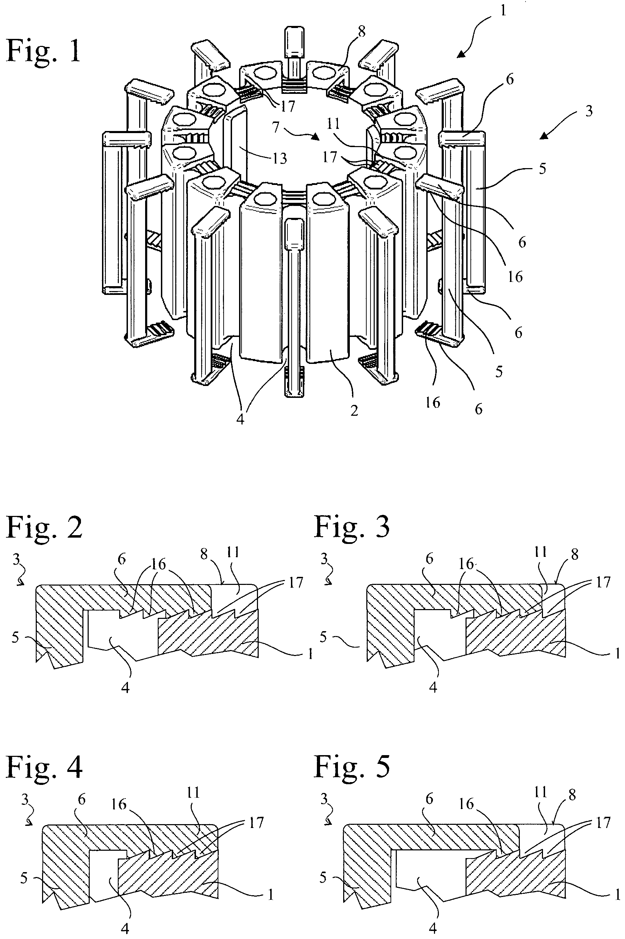

Figur 1 zeigt in einer auseinandergezogenen perspektivischen Ansicht einen Walzenbürstengrundkörper 1 und Besatzhalter 3 fiir eine Walzenbürste, die in einer Waschanlage für Personenkraftwagen verwendbar ist. Der Walzenbürstengrundkörper 1 weist die Form eines zylindrischen Rings auf. Längsrippen 13 an einer inneren Mantelfläche des Rings sorgen für eine formschlüssige Verbindung mit einer in der Figur nicht dargestellten Welle. Sich in Richtung der Zylinderachse erstreckende Axialnuten 4 sind an der äußeren Mantelfläche 2 des Walzenbürstengrundkörpers 1 in Umfangsrichtung gleichmäßig verteilt. An den Stirnseiten 8 des Walzenbürstengrundkörpers 1 gehen die Axialnuten 4 in Radialnuten 11 über, die auf die Zylinderachse zulaufen. Die Radialnuten 11 weisen an ihrem Boden jeweils ein sägezahnartiges Profil mit mehreren in radialer Richtung aufeinanderfolgenden Rastkerben 17 auf.

Die Besatzhalter 3 umfassen jeweils einen Steg 5, dessen Länge der Länge der Axialnuten 4 entspricht und deren Querschnitt bemessen ist, um, wenn ein Besatzhalter 3 am Walzenbürstengrundkörper 1 montiert ist, ringsum spielhaltig in die Axialnut 4 einzugreifen, so dass rings um den Steg 5 ein Durchgang frei bleibt, in dem ein Bürstenbesatz zwischen dem Steg 5 und der Innenfläche der Axialnut 4 durch Einklemmen fixierbar ist. Von den Enden des Stegs 5 stehen rechtwinklig zwei Arme 6 ab, die an ihren einander zugewandten Innenseiten jeweils wenigstens einen Rastvorsprung 16 tragen.

Die hier nicht dargestellten Besatzelemente können als Borsten, Tufts oder Lappen ausgebildet sein. Beim Zusammenbau der Walzenbürste können sie zunächst über den horizontal gehaltenen Steg gelegt werden, so dass sie auf beiden Seiten herunterhängen. Wenn anschließend der Besatzhalter 3 an eine Axialnut 4 des mit ebenfalls horizontal orientierter Zylinderachse gehaltenen Walzenbürstengrundkörpers 1herangeführt wird, greifen die Arme 6 in die Radialnuten 11 ein und werden dabei zunächst, wenn ihre Rastvorsprünge 16 über eine Rampe des Sägezahnprofils der Axialnuten 11 gleiten, elastisch auseinandergebogen. Eine erste Rastposition ist erreicht, sobald die erste Rampe passiert ist und die Rastvorsprünge 16 in die jeweils radial am weitesten außen liegende Rastkerbe 17 der Axialnuten 4 eingreifen. Weitere Rastpositionen sind durch den Eingriff der Rastvorsprünge 16 in radial schrittweise weiter innenliegende Rastkerben 17 definiert. Von der Materialstärke der Besatzelemente hängt es ab, bis zu welcher Rastposition die Arme 6 in die Radialnuten 11 vordringen können.

Fig. 2 zeigt einen Schnitt in radialer Richtung durch einen Arm 6 eines der Besatzhalter 3 und die Radialnut 11, in die er eingreift. Der Besatzhalter 3 befindet sich in der äußersten von insgesamt drei möglichen Rastpositionen, die beiden anderen sind in Fig. 3 und 4 gezeigt. Die Zahl der Rastpositionen kann variiert werden; je weniger das Besatzmaterial elastisch komprimierbar ist, umso enger gestaffelt sollten die Rastpositionen sein, um eine sichere Klemmung der Besatzelemente zu gewährleisten.

Bei der Ausgestaltung der Fig. 2-4 müssen die Arme 6 umso weiter auseinandergespreizt werden, je tiefer die Arme 6 in die Radialnuten 11 vordringen, so dass die innenliegenden Rastpositionen nur mit großem Kraftaufwand erreichbar sind. Bei der in Fig. 5 gezeigten Variante liegt ein einziger Rastvorsprung 16 des Arms 6 mehreren Rastkerben 17 in der Radialnut 11 gegenüber, so dass die zum Übergang von einer Rastposition zur nächsten erforderliche Auslenkung immer dieselbe ist.

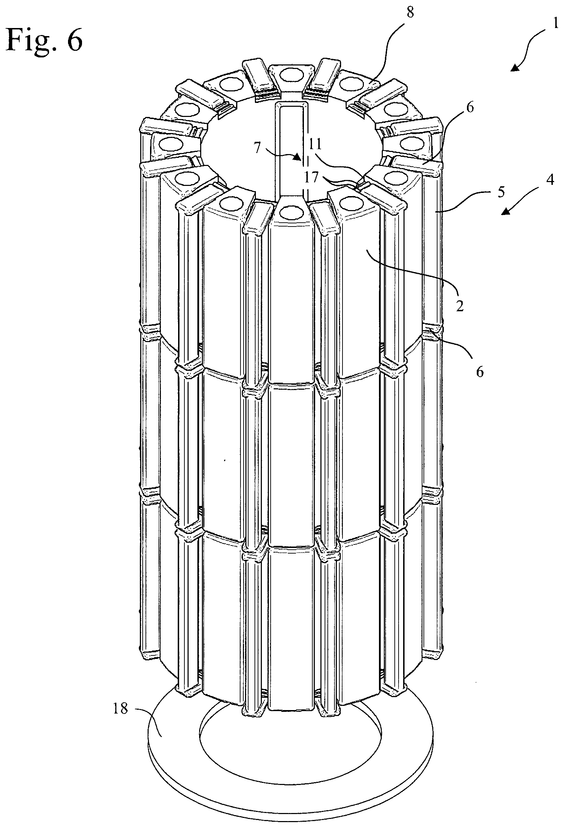

Wie in Fig. 2 bis 5 zu sehen, sind die den Rastvorsprüngen 16 gegenüberliegenden Außenseiten der Arme 6 in den Rastpositionen bündig mit einer Stirnseite 8 des Walzenbiirstengrundkörpers 1. Dadurch ist sind, wenn wie in Fig. 6 gezeigt, mehrere mit Besatzhaltern 3 bestückte Walzenbürstengrundkörper 1 aufeinandergestapelt sind, um eine vollständige Walzenbürste zu bilden, zumindest an den aneinander anliegenden Stirnseiten 8 die Arme 6 in den Radialnuten 11 unlösbar gefangen. An den am oberen und unteren Ende der Walzenbürste freiliegenden Stirnseiten 8 können die Arme 6, wenn nötig, durch Befestigen eines Abdeckrings 18 gesichert werden.

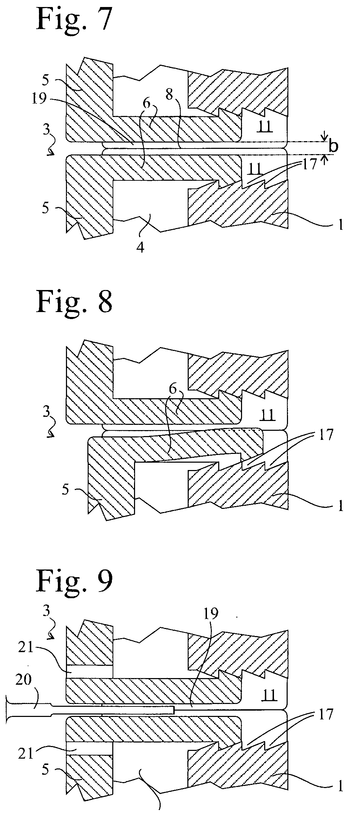

Fig. 7 zeigt einen Schnitt durch eine Walzenbürste gemäß einer weiteren Abwandlung der Erfindung. Die Stirnseiten 8 zweier Walzenbürstengrundkörper 1 liegen aufeinander. Allerdings sind die Außenseiten der Arme 6 hier nicht mit den Stirnseiten 8 bündig, sondern springen hinter sie zurück, so dass zwischen den sich gegenüberliegenden Außenseiten ein Spalt 19 offen ist, dessen axiale Ausdehnung b größer ist als die maximale Auslenkung, die ein Arm 6 beim Übergang in die jeweils benachbarte Rastposition erfährt. Daher ist es möglich, wie in Fig. 8 gezeigt, die Besatzhalter 3 bei Bedarf in eine radial weiter innenliegende Position zu verschieben und den Besatz zwischen Walzenbürstengrundkörper 1 und Besatzhaltern 3 nachträglich fester zu klemmen, ohne dafür die Walzenbürste zerlegen oder aus einer Waschanlage, in der sie im Einsatz ist, ausbauen zu müssen.

Um ein Entweichen der Arme 6 aus den Rastpositionen während des Waschbetriebs auszuschließen, kann wie in Fig. 9 gezeigt ein Sicherungskeil 20 in den Spalt getrieben werden.

Des Weiteren können die Besatzhalter 3 jeweils im Übergangsbereich zwischen den Armen 6 und dem Steg 5 eine radiale Bohrung 21 aufweisen, durch die ein Werkzeug wie etwa ein Schraubenzieher zwischen den Arm 6 und den Boden der Radialnut 11 einführbar ist, um den Arm 6 von dem Boden abzuspreizen und den Eingriff des Rastvorsprungs 16 in die Rastkerbe 17 zu lösen. So kann, ebenfalls ohne die Walzenbürste ausbauen zu müssen, der Besatzhalter 3 vom Walzenbürstengrundkörper 1 gelöst und ein abgenutzter Besatz ausgewechselt werden.

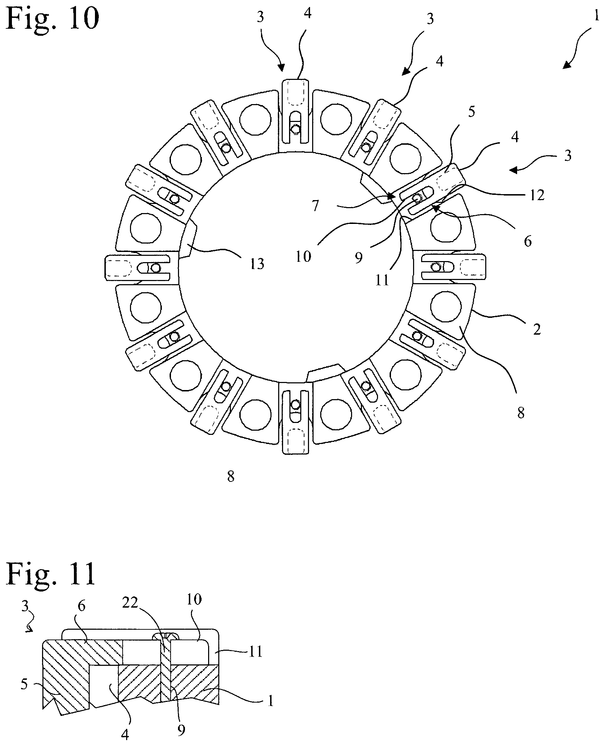

Fig. 10 zeigt eine Draufsicht in axialer Richtung auf eine Walzenbürste gemäß einer fünften Ausgestaltung der Erfindung. Die Besatzhalter 3 unterscheiden sich von denen der bisher betrachteten Ausgestaltungen dadurch, dass in den Armen 6 jeweils ein radial langgestreckter Schlitz 10 gebildet ist. Durch den Schlitz 10 hindurch ist ein Loch 9 am Boden der Radialnut 11 zu erkennen. In das Loch 9 kann eine Schraube eingeschraubt werden, deren Kopf, indem er an einer vom Walzenbürtsengrundkörper 1 abgewandten Seite des Amrs 6 anliegt, den Arm 6 gegen den Boden der Nut 11 gedrückt hält und den Arm 6 so in seiner Rastposition sichert.

Einer in Fig. 11 dargestellten Abwandlung dieser Ausgestaltung zufolge sind der Boden der Radialnut 11 und die von der Schraube 22 dagegengedrückte Innenseite des Arms 6 eben. Dann kann der Arm 6 nicht nur in diskreten Rastpositionen arretiert werden, sondern in jeder beliebigen Position, in der der Bürstenbesatz zwischen Walzenbürstengrundkörper 1 und Besatzhalter 3 ausreichend fest geklemmt ist.

### Bezugszeichenliste

- 1: Walzenbürstengrundkörper
- 2: äußere Mantelfläche
- 3: Besatzhalter
- 4: Axialnut
- 5: Steg
- 6: Arm
- 8: Stirnseite
- 9: Loch
- 10: Schlitz
- 11: Radialnut
- 13: Längsrippe
- 16: Rastvorsprung
- 17: Rastkerbe
- 18: Abdeckring
- 19: Spalt
- 20: Sicherungskeil
- 21: Bohrung
- 22: Schraube

## Patentansprüche

1. Walzenbürste zur Behandlung der Oberfläche eines Fahrzeugs, mit einem Walzenbürstengrundkörper (1) und mehreren an einer äußeren Mantelfläche (2) des Walzenbürstengrundkörpers (1) in dessen Umfangsrichtung beabstandet angeordneten Besatzhaltern (3), wobei der Walzenbürstengrundkörper (1) und jeder Besatzhalter (3) zusammenwirkende grundkörperseitige bzw. besatzhalterseitige Rastmittel umfassen, **dadurch gekennzeichnet, dass** jeder Besatzhalter (3) an dem Walzenbürstengrundkörper (1) in mehreren in Radialrichtung des Walzenbürstengrundkörpers (1) beabstandeten Arretierpositionen fixierbar ist, dass die Arretierpositionen Rastpositionen der Rastmittel sind und dass eines der Rastmittel mehrere in Radialrichtung des Walzenbürstengrundkörpers (1) beabstandete Rastkerben (17) umfasst und ein Rastvorsprung (16) des anderen Rastmittels in jeder Rastposition in eine der Rastkerben (17) des einen Rastmittels eingreift.

2. Walzenbürste nach Anspruch 1, **dadurch gekennzeichnet, dass** ein Bürstenbesatz zwischen dem Walzenbürstengrundkörper und jedem Besatzhalter (3) geklemmt ist.

3. Walzenbürste nach Anspruch 1, **dadurch gekennzeichnet, dass** die Besatzhalter (3) jeweils einen in axialer Richtung des Walzenbürstengrundkörpers (1) langgestreckten Steg (5) und jeweils mindestens einen von dem Steg (5) in radialer Richtung des Walzenbürstengrundkörpers (1) abstehenden, die besatzhalterseitigen Rastmittel tragenden Arm (6) aufweisen.

4. Walzenbürste (1) nach Anspruch 3, **dadurch gekennzeichnet, dass** an jedem Ende der Stege (5) jeweils ein Arm (6) mit besatzhalterseitigen Rastmitteln vorgesehen ist.

5. Walzenbürste (1) nach Anspruch 3 oder 4, **dadurch gekennzeichnet, dass** grundkörperseitige Rastmittel an wenigstens einer Stirnseite (8) des Walzenbürstengrundkörpers (1) vorgesehen sind.

6. Walzenbürste nach einem der Ansprüche 3 bis 5, **dadurch gekennzeichnet, dass** der Arm (6) zwischen zwei Rastpositionen eine elastisch ausgelenkte Stellung durchläuft.

7. Walzenbürste (1) nach Anspruch 6, **dadurch gekennzeichnet, dass** der Arm (6) in der elastisch ausgelenkten Stellung in axialer Richtung des Walzenbürstengrundkörpers (1) nach außen ausgelenkt ist.

8. Walzenbürste (1) nach einem der Ansprüche 3 bis 7, **dadurch gekennzeichnet, dass** der Arm (6) sich über eine Stirnseite (8) des Walzengrundkörpers (1) erstreckt.

9. Walzenbürste (1) nach Anspruch 8, **dadurch gekennzeichnet, dass** der Arm (6) zwischen dem ersten und einem zweiten Walzenbürstengrundkörper (1) axial fixiert ist.

10. Walzenbürste (1) nach Anspruch 8 oder 9, **dadurch gekennzeichnet, dass** der Arm (6) in der Rastposition in einer Nut (11) an einer Stirnseite (8) des ersten Walzenbürstengrundkörpers (1) versenkt ist.

11. Walzenbürste (1) nach Anspruch 10, **dadurch gekennzeichnet, dass** eine axiale Auslenkung des Arms (6), die zum Übergehen von einer Rastposition des Arms (6) in eine andere erforderlich ist, größer als die Auslenkung zwischen der Rastposition und einer mit der Stirnseite (8) bündigen Position und vorzugsweise nicht größer als das Doppelte der Auslenkung zwischen der Rastposition und der mit der Stirnseite bündigen Position ist.

12. Walzenbürste nach einem der Ansprüche 3 bis 11, **dadurch gekennzeichnet, dass** die Arme (6) einen Durchgang aufweisen, in den ein Riegel (22) in axialer Richtung einführbar ist.

13. Walzenbürste nach einem der Ansprüche 3 bis 12, **dadurch gekennzeichnet, dass** der Arm in einer der Rastpositionen durch einen Riegel (22) gesichert ist, von dem ein Fuß im Walzenbürstengrundkörper (1) verankert ist und ein Kopf an einer vom Walzenbürstengrundkörper (1) abgewandten Seite des Arms (6) anliegt.

14. Walzenbürste nach Anspruch 12 und Anspruch 13, **dadurch gekennzeichnet, dass** der Durchgang ein Langloch oder ein Schlitz (10) ist, der in radialer Richtung langgestreckt ist

15. Walzenbürste nach einem der vorhergehenden Ansprüche, **dadurch gekennzeichnet, dass** die Besatzhalter (3) in Axialnuten (4) an der äußeren Mantelfläche (2) des Walzenbürstengrundkörpers (1) eingreifen.

## Claims

1. A rotary brush for processing the surface of a vehicle, comprising a rotary brush base body (1) and a plurality of fill material holders (3) disposed on an outer lateral surface (2) of the rotary brush base body (1) and spaced apart from each other in the circumferential direction thereof, in which the rotary brush base body (1) and each fill material holder (3) comprise interacting locking means on the base body side or fill material holder side, respectively, **characterized in that** each fill material holder (3) can be secured to the rotary brush base body (1) in a plurality of stop positions spaced apart from each other in the radial direction of the rotary brush base body (1), **in that** the stop positions are locking positions of the locking means and that one of the locking means comprises a plurality of locking notches (17) spaced apart from each other in the radial direction of the rotary brush base body (1) and that a locking lug (16) of the other locking means in each locking position engages in one of the locking notches (17) of the one locking means.

2. The rotary brush as in Claim 1, **characterized in that** a brush fill material is clamped between the rotary brush base body and each fill material holder (3).

3. The rotary brush as in Claim 1, **characterized in that** the fill material holders (3) have each a rib-like member (5) extending along the axial direction of the rotary brush base body (1) and at least one arm (6) projecting from the rib-like member (5) in the radial direction of the rotary brush base body (1) and carrying the locking means on the fill material holder side.

4. The rotary brush (1) as in Claim 3, **characterized in that** disposed on each end of the rib-like members (5) is an arm (6) comprising locking means on the fill material holder side.

5. The rotary brush (1) as in Claim 3 or 4, **characterized in that** locking means on the base body side are disposed on at least one end face (8) of the rotary brush base body (1).

6. The rotary brush as in one of Claims 3 to 5, **characterized in that** between two locking positions, the arm (6) assumes an elastically deflected position.

7. The rotary brush (1) as in Claim 6, **characterized in that** in the elastically deflected position, the arm (6) is outwardly deflected in the axial direction of the rotary brush base body (1).

8. The rotary brush (1) as in one of Claims 3 to 7, **characterized in that** the arm (6) extends over an end face (8) of the rotary brush base body (1).

9. The rotary brush (1) as in Claim 8, **characterized in that** the arm (6) is axially secured between the first and a second rotary brush base body (1).

10. The rotary brush (1) as in Claim 8 or 9, **characterized in that** the arm (6) in the locking position is recessed in a groove (11) on an end face (8) of the first rotary brush base body (1).

11. The rotary brush (1) as in Claim 10, **characterized in that** an axial deflection of the arm (6), which is necessary for the arm (6) to move from one locking position to the next, is greater than the deflection between the locking position and a position that is flush with the end face (8) and preferably no greater than twice the deflection between the locking position and the position that is flush with the end face.

12. The rotary brush as in any one of Claims 3 to 11, **characterized in that** the arms (6) comprise a through-passage, into which a bolt (22) can be inserted in the axial direction.

13. The rotary brush as in any one of Claims 3 to 12, **characterized in that** the arm in one of the locking positions is secured by a bolt (22), a base of which is anchored in the rotary brush base body (1) and a head of which abuts a surface of the arm (6) facing away from the rotary brush base body (1).

14. The rotary brush as in Claim 12 and Claim 13, **characterized in that** the through-passage is an oblong hole or a slot (10) which extends along the radial direction.

15. The rotary brush as in any one of the preceding claims, **characterized in that** the fill material holders (3) engage in axial grooves (4) on the outer lateral surface (2) of the rotary brush base body (1).

## Revendications

1. Brosse cylindrique pour le traitement de la surface d'un véhicule, comprenant un corps de base de brosse cylindrique (1) et plusieurs supports de garniture (3) disposés au niveau d'une surface d'enveloppe extérieure (2) du corps de base de brosse cylindrique (1) de manière espacée dans sa direction périphérique, le corps de base de brosse cylindrique (1) et chaque support de garniture (3) comprenant des moyens d'encliquetage coopérants, disposés du côté du corps de base, respectivement du côté du support de garniture, **caractérisée en ce que** chaque support de garniture (3) peut être fixé sur le corps de base de brosse cylindrique (1) dans plusieurs positions de blocage espacées dans la direction radiale du corps de base de brosse cylindrique (1), **en ce que** les positions de blocage sont des positions d'encliquetage des moyens d'encliquetage et **en ce que** l'un des moyens d'encliquetage comprend plusieurs encoches d'encliquetage (17) espacées dans la direction radiale du corps de base de brosse cylindrique (1) et une saillie d'encliquetage (16) de l'autre moyen d'encliquetage s'engage dans chaque position d'encliquetage dans l'une des encoches d'encliquetage (17) dudit moyen d'encliquetage.

2. Brosse cylindrique selon la revendication 1, **caractérisée en ce qu'**une garniture de brosse est serrée entre le corps de base de brosse cylindrique et chaque support de garniture (3).

3. Brosse cylindrique selon la revendication 1, **caractérisée en ce que** les supports de garniture (3) présentent à chaque fois une nervure (5) allongée dans la direction axiale du corps de base de brosse cylindrique (1) et à chaque fois au moins un bras (6) faisant saillie depuis la nervure (5) dans la direction radiale du corps de base de brosse cylindrique (1), portant les moyens d'encliquetage du côté du support de garniture.

4. Brosse cylindrique (1) selon la revendication 3, **caractérisée en ce qu'**un bras (6) avec des moyens d'encliquetage du côté du support de garniture est à chaque fois prévu au niveau de chaque extrémité des nervures (5).

5. Brosse cylindrique (1) selon la revendication 3 ou 4, **caractérisée en ce que** des moyens d'encliquetage du côté du corps de base sont prévus au niveau d'au moins un côté frontal (8) du corps de base de brosse cylindrique (1).

6. Brosse cylindrique selon l'une quelconque des revendications 3 à 5, **caractérisée en ce que** le bras (6) passe par une position déviée élastiquement entre deux positions d'encliquetage.

7. Brosse cylindrique (1) selon la revendication 6, **caractérisée en ce que** le bras (6), dans la position déviée élastiquement, est dévié vers l'extérieur dans la direction axiale du corps de base de brosse cylindrique (1).

8. Brosse cylindrique (1) selon l'une quelconque des revendications 3 à 7, **caractérisée en ce que** le bras (6) s'étend sur un côté frontal (8) du corps de base cylindrique (1).

9. Brosse cylindrique (1) selon la revendication 8, **caractérisée en ce que** le bras (6) est fixé axialement entre le premier et le deuxième corps de base de brosse cylindrique (1).

10. Brosse cylindrique (1) selon la revendication 8 ou 9, **caractérisée en ce que** le bras (6), dans la position encliquetée, est renfoncé dans une rainure (11) au niveau d'un côté frontal (8) du premier corps de base de brosse cylindrique (1).

11. Brosse cylindrique (1) selon la revendication 10, **caractérisée en ce qu'**une déviation axiale du bras (6), qui est nécessaire pour le passage d'une position d'encliquetage du bras (6) dans une autre, est supérieure à la déviation entre la position d'encliquetage et une position en affleurement avec le côté frontal (8) et de préférence n'est pas supérieure à deux fois la déviation entre la position d'encliquetage et la position en affleurement avec le côté frontal.

12. Brosse cylindrique selon l'une quelconque des revendications 3 à 11, **caractérisée en ce que** les bras (6) présentent un passage dans lequel un verrou (22) peut être introduit dans la direction axiale.

13. Brosse cylindrique selon l'une quelconque des revendications 3 à 12, **caractérisée en ce que** le bras, dans l'une des positions d'encliquetage, est fixé par un verrou (22), dont une base est ancrée dans le corps de base de brosse cylindrique (1) et dont une tête s'applique contre un côté du bras (6) opposé au corps de base de brosse cylindrique (1) .

14. Brosse cylindrique selon la revendication 12 et la revendication 13, **caractérisée en ce que** le passage est un trou oblong ou une fente (10) qui est allongé(e) dans la direction radiale.

15. Brosse cylindrique selon l'une quelconque des revendications précédentes, **caractérisée en ce que** les supports de garniture (3) s'engagent dans des rainures axiales (4) au niveau de la surface d'enveloppe extérieure (2) du corps de base de brosse cylindrique (1).
